# EUROPEAN PATENT SPECIFICATION

(11) **EP 3 358 835 B1**
(45) Date of publication and mention of the grant of the patent: **18.11.2020**
(21) Application number: 17210684.1
(22) Date of filing: 27.12.2017
(51) Int. Cl.: H04N 7/14

(54) **IMPROVED METHOD AND SYSTEM FOR VIDEO CONFERENCES WITH HMDS**
VERBESSERTES VERFAHREN UND SYSTEM FÜR VIDEOKONFERENZEN MIT HMDS
PROCÉDÉ ET SYSTÈME AMÉLIORÉS POUR VIDÉOCONFÉRENCES PAR HMDS

(30) Priority: 03.02.2017 WO PCT/EP2017/052449
(43) Date of publication of application: 08.08.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- US-A1- 2004 130 614
- US-A1- 2010 182 220
- US-A1- 2014 184 724
- US-A1- 2016 217 621

## Description

The present invention refers to a method for modifying video data during a video conference session according to claim 1, a computer program product for executing such a method according to claim 14 and a system for video conference sessions according to claim 15.

### Background of the Invention

The technical field of the present invention refers to video conference systems. Such video conference systems enable visual communication via separated terminals, like computer or laptops or smartphones, over a data connection, in particular an internet connection. In some video conference systems head-mounted displays (HMDs) are used. Such HMD enable a virtual reality (VR) and/or augmented reality (AR) and/or mixed reality (MR).

Other than video conference, virtual meeting rooms, virtual spaces, role playing games and virtual environments in general are also carried out with HMDs and HMDs are annoying and disturbing in such applications as well if users real face cannot be seen.

Document US6806898B1 discloses a system and method for automatically adjusting gaze and head pose in a videoconferencing environment, where each participant has a camera and display. The images of participants are rendered in a virtual 3D space. Head-pose orientation and eye-gaze direction are corrected so that a participant's image in the 3D space appears to appear to be looking at the person they are looking at on the screen. If a participant is looking at the viewer, their gaze is set toward the "camera", which gives the perception of eye-contact. Document US20080252637 discloses a virtual reality-based teleconferencing.

Document US20110202306 discloses an adjustable virtual reality system.

Video-conference with head-mounted-displays can be disturbing, because the other people in the conference only see a small portion of the face of a person wearing said HMD- due to the large size of the HMD.

Document US2004/0130614A1 discloses a method, system and apparatus for telepresence communication.

Document US2016/0217621 A1 discloses an image processing method including capturing an image of the head of a user of a head mountable display device. The position of the head mountable display device is detected in the image captured by a camera. A region of the user's face that is occluded by the head mountable display device is identified. The portion of the captured image corresponding to the head mountable display device is at least partially replaced with a corresponding portion of a 3D facial model, to provide a modified version of the captured image.

### Object of the Invention

Thus, it is the object of the present invention to provide a method for video conferences and a video conference system that improves user comfort during a video conference session.

### Description of the Invention

The before mentioned object is solved by a method for modifying video data during a video conference session according to claiml. The inventive method comprises at least the steps: providing a first terminal, comprising a first camera unit for capturing of at least visual input and a first head-mounted display, wherein the first head-mounted display comprises a QR-Code, providing a second terminal at least for outputting visual input, providing a server means or communication means or transfer medium, wherein said first terminal and said second terminal are connected via the transfer medium, in particular server means, for data exchange, providing or capturing first basic image data or first basic video data of a head of a first person with the first camera unit, capturing first process image data or first process video data of the head of said first person while said first person wears the head-mounted display with the first camera unit, determining first process data sections of the first process image data or first process video data representing the visual appearance of the first head-mounted display and the QR-code, wherein the QR-code represents information about the shape of the HMD or a link for downloading data representing the shape of said HMD, generating a first set of modified image data or modified video data by replacing the first process data sections of the first process image data or first process video data by first basic data sections, wherein the first basic data sections are part of the first basic image data or first basic video data and are representing parts of the face of said person, in particularly the eyes of said person, in particular for outputting the first modified image data or first modified video data, in particular representing a complete face of said person, via at least one further terminal, in particular at least the second terminal.

Thus, the present invention discloses a method to provide a preferably full face video-conference while one, two or multiple users wear head-mounted-displays (HMD) such as virtual reality glasses (VR) or augmented reality glasses (AR). In case where one, two or multiple parties using HMD/VR/AR devices significant portion of user face, especially eyes, are covered with HMD/VR/AR device so that other user are not able see full face and making video-conference somehow meaningless. With the novel method, one or multiple prior recorded face pose/s of a person respectively an user is overlaid (superimposed) on real-time video and transferred to remote destinations to establish video-conference with full face view without any obstacle.

Further preferred embodiment are subject-matter of dependent claims and/or the following specification parts.

According to a preferred embodiment of the present invention the second terminal comprises a second camera unit and a second head-mounted display. The invention is further characterized by steps like providing or capturing second basic image data or second basic video data of a head of a second person with the second camera unit, and capturing second process image data or second process video data of the head of said second person while said second person wears the second head-mounted display with the second camera unit and determining second process data sections of the second process image data or second process video data representing the visual appearance of the second head-mounted display and generating respectively forming a second set of modified image data or modified video data by replacing the second process data sections of the second process image data or second process video data by second basic data sections, wherein the second basic data sections are part of the second basic image data or second basic video data and are representing parts of the face of said second person, in particularly the eyes of said second person, in particular for outputting the second modified image data or second modified video data via the first terminal. This embodiment is beneficial since not just one or not just at least one HMD is integrated into the video conference method. Thus, two or at least two persons or user can use the inventive video conference method while wearing HMDs.

The first modified image data or first modified video data and/or the second modified image data or second modified video data is/are according to a further preferred embodiment of the present invention outputted via at least one further terminal connected to the server means. This embodiment is beneficial since not every terminal needs to have a HMD. Thus, persons or users wearing or not wearing a HMD can interact in the same manner, in particular the faces, in particular full facer or without HMD, of each user respectively person are displayed on the one, two or at least one or at least two or multiple terminals.

A terminal can be understood as every device having a screen or projecting a visual image on a surface or in space. Thus, terminals are preferably laptops, tablet PCs, desktop PC, smartphones, TVs, etc. It is further conceivable that terminal and HMD are one device.

A further terminal comprises according to a further preferred embodiment of the present invention a further camera unit and a further head-mounted display. The invention is further characterized by the steps providing or capturing further basic image data or further basic video data of a head of a further person with the further camera unit, capturing further process image data or further process video data of the head of said further person while said further person wears the further head-mounted display with the further camera unit, determining further process data sections of the further process image data or further process video data representing the visual appearance of the further head-mounted display, forming a further set of modified image data or modified video data by replacing the further process data sections of the further process image data or further process video data by further basic data sections, wherein the further basic data sections are part of the further basic image data or further basic video data and are representing parts of the face of said further person, in particularly the eyes of said further person, in particular outputting the further modified image data or further modified video data via the first terminal and/or via the second terminal and/or any further terminal, in particular at the same time. This embodiment is beneficial since multiple users or persons, in particular more than two or three or more than three or four or more than four can wear respectively use HMDs. It is also conceivable that different types of HMDs, in particular VR and AR devices, are utilized in the same video conference session. Thus, each HMD represented by process image data or process video data can be replaced with data representing a face part, in particular the eyes, of a user using said respective HMD.

First, second and/or further basic video data or first, second and/or further basic image data are according to a preferred embodiment of the present invention stored in a memory of the respective terminal and/or on the server means. First, second and/or further basic video data or first, second and/or further basic image data are captured once and processed in case first, second and/or further modified video data or first, second and/or further modified image data is required. Alternatively first, second and/or further basic video data or first, second and/or further basic image data are captured each time said first, second and/or third person joins a video conference and the first, second and/or further basic video data or first, second and/or further basic image data is updated or replaced and processed in case first, second and/or further modified video data or first, second and/or further modified image data is required.

At least one terminal and preferably the majority of terminals or all terminals are according to a further preferred embodiment of the present invention comprising means for capturing and/or outputting audio data, wherein said captured audio data captured by one terminal is at least routed to one or multiple further terminals. Such a means can be e.g. a microphone. The audio capturing means can be arranged at the HMD or can be part of the terminal.

The position of the first head-mounted display with respect to the face of the first person is determined according to a further preferred embodiment of the present invention by means of object recognition. The shape of the first head-mounted display is preferably determined by object recognition and/or identification data visually or electronically provided. Electronical identification data is provided due to a data connection between the first head-mounted display and the first terminal. The position of the second head-mounted display with respect to the face of the second person is determined according to a further preferred embodiment of the present invention by means of object recognition. The shape of the second head-mounted display is preferably determined by object recognition and/or identification data visually or electronically provided. Electronical identification data is provided due to a data connection between the second head-mounted display and the second terminal. The position of the further head-mounted display with respect to the face of the further person is determined according to a further preferred embodiment of the present invention by means of object recognition. The shape of the further head-mounted display is preferably determined by object recognition and/or identification data visually or electronically provided. Electronical identification data is provided due to a data connection between the further head-mounted display and the further terminal.

Face movement data representing movements of skin portions of the face of the first person is according to a further preferred embodiment of the present invention generated, wherein the movements of the skin portions are captured by said first camera unit. Face movement data representing movements of skin portions of the face of the second person is preferably also generated, wherein the movements of the skin portions are captured by said second camera unit. Face movement data representing movements of skin portions of the face of the third person is preferably also generated, wherein the movements of the skin portions are captured by said third camera unit.

Eye movement data representing movements of at least one eye of the first person is generated according to a further preferred embodiment of the present invention, wherein the movements of the eye are captured by an eye tracking means. Eye movement data representing movements of at least one eye of the second person is also generated, wherein the movements of the eye are captured by a second eye tracking means. Eye movement data representing movements of at least one eye of the further person is also generated, wherein the movements of the eye are captured by a further eye tracking means. Skin movements of the face can be detected by an optional face movement detector, wherein said face movement detector can be provided in addition or alternatively to an eye tracking means. It is further conceivable that a combined eye tracking and face movement detector is provided, in particular arranged on or inside the HMD or as part of the HMD.

First basic data sections are according to a further preferred embodiment modified in dependency of said captured face movement data of the face of the first person and/or of said captured eye movement data of at least one eye of the first person. Second basic data sections are according to a further preferred embodiment modified in dependency of said captured face movement data of the face of the second person and/or of said captured eye movement data of at least one eye of the second person. Third basic data sections are according to a further preferred embodiment modified in dependency of said captured face movement data of the face of the third person and/or of said captured eye movement data of at least one eye of the third person.

Eye data representing shapes of the eyes of the first person as part of the first basic data sections is identified according to a further preferred embodiment. The eye data is preferably modified in dependency of said captured eye movement data and/or skin data representing the skin portions of the face of the first person above and/or below the eyes in the first basic data section is preferably identified. The skin data is preferably modified in dependency of said captured face movement data. Eye data representing shapes of the eyes of the second person as part of the second basic data sections is identified according to a further preferred embodiment. The eye data is preferably modified in dependency of said captured eye movement data and/or skin data representing the skin portions of the face of the second person above and/or below the eyes in the second basic data section is preferably identified. The skin data is preferably modified in dependency of said captured face movement data. Eye data representing shapes of the eyes of the further person as part of the further basic data sections is identified according to a further preferred embodiment. The eye data is preferably modified in dependency of said captured eye movement data and/or skin data representing the skin portions of the face of the further person above and/or below the eyes in the further basic data section is preferably identified. The skin data is preferably modified in dependency of said captured face movement data. This embodiment is beneficial since visual data representing the eye movement of the respective person using a HMD can be utilized to further enhance the usability and/or comfort of a video conference session respectively system.

An eye tracking means is preferably a near eye PCCR tracker. Said eye tracking means is preferably arrange on or inside the first head-mounted display and/or on or inside the second head-mounted display and/or on or inside the further head-mounted display.

According to a further preferred embodiment of the present invention the inventive method comprises the steps of receiving information, in particular by means of camera unit, relating to the pose of the head of the first person, orienting a virtual model of the head and facial gaze of the head according to the pose of the object, in particular head of first person, projecting visible pixels from a portion of the videoconference communication onto the virtual model, creating synthesized eyes of the head that produces a facial gaze at a desired point in space, orienting the virtual model according to the produced facial gaze; and projecting the virtual model onto a corresponding portion of the videoconference communication, wherein at least one part of the first set of modified image data or modified video data is replaced by said virtual model. This embodiment is beneficial since the respective (first, second and/or further) process image data or (first, second and/or further) process video data can be modified to further enhance the inventive method respectively inventive system.

Creating synthesized eyes preferably includes receiving segmentation information of the eyes and estimating iris and pupil information to create the synthetic eye. Synthesized eyes further preferably include digitally drawing the synthetic eyes on a corresponding portion of the video conference communication using the segmentation information to replace the original eyes with the synthetic eyes. Preferably, a step of digitally adjusting the synthesized eyes of the virtual model in real time during videoconference communication is provided. The video conference communication preferably occurs between at least two participants and is highly preferably facilitated by at least one of the Internet, integrated services digital network, or a direct communication link.

The present invention further refers to a computer program product for executing a method according to claims 1-13.

The present invention further refers to a system for video conference sessions. Said system preferably comprises at least a first terminal, comprising a first camera unit for capturing of at least visual input and a first head-mounted display, wherein the first head-mounted display comprises a QR-Code, a second terminal at least for outputting visual input, a server means, wherein said first terminal and said second terminal are connected via the server means for data exchange, wherein first basic image data or first basic video data of a head of a first person is provided or captured with the first camera unit, wherein first process image data or first process video data of the head of said first person is captured while said first person wears the head-mounted display with the first camera unit, wherein first process data sections of the first process image data or first process video data representing the visual appearance of the first head-mounted display and the QR-code are determined, wherein the QR-code represents information about the shape of the HMD or a link for downloading data representing the shape of said HMD, wherein a first set of modified image data or modified video data is formed by replacing the first process data sections of the first process image data or first process video data by first basic data sections, wherein the first basic data sections are part of the first basic image data or first basic video data and are representing parts of the face of said person, in particularly the eyes of said person, wherein the first modified image data or first modified video data, in particular representing a complete face of said person, are outputted via the second terminal.

Further benefits, goals and features of the present invention will be described by the following specification of the attached figures, in which exemplarily components of the invention are illustrated. Components of the systems and methods according to the inventions, which match at least essentially with respect to their function can be marked with the same reference sign, wherein such components do not have to be marked or described multiple times with respect to said figures.

In the following the invention is just exemplarily described with respect to the attached figures.

### Brief Description of the Drawing

- Fig. 1: shows a schematic illustration of a state of the art video conference session in which HMDs are used;
- Fig. 2: shows a first schematic illustration of a video conference session according to the present invention in which HMDs are also used;
- Fig. 3: shows a second schematic illustration of a video conference session according to the present invention in which HMDs are also used;
- Fig. 4: shows schematically a replacement of pixels representing a HMD by pixels representing a portion of a human face shape;
- Fig. 5: shows several HMDs which can be used during the inventive video conference session;
- Fig. 6: shows several possibilities for identifying the HMD in use respectively for detecting the shape of the HMD in use;
- Fig. 7: shows a front and a side view of a schematically illustrated HMD, wherein the shown HMD comprises an eye tracking means;
- Fig. 8: shows schematically a scene during facial motion tracking, wherein facial motion tracking can be performed with or without markers;
- Fig. 9: shows an example of a system activation flow chart;
- Fig. 10: shows schematically an example of a flow chart representing steps during image processing; and
- Fig. 11: shows schematically a video conference with multiple users.
- Fig. 12: shows multiple users connected to a virtual environment, virtual meeting room in exemplary case.

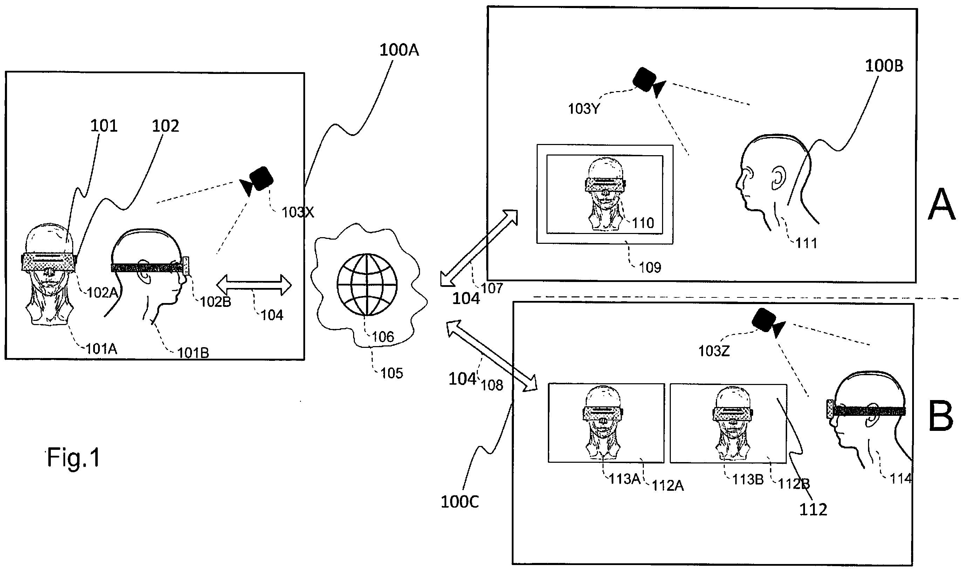

Fig. 1 shows a prior art setting. A front view 101A of a head of a first user and side view (profile) 101B of said head of the first user 101 are shown herein. The first user 101 wears a HMD 102. Said HMD 102 (VR glass in exemplary case) is shown in a front view 102A and in a side view 102B. The head of first user 101 is captured by a first camera unit 103X. The first camera unit 103X is a camera unit that can be utilized during video-conference sessions. The first camera unit 103X is preferably positioned externally in exemplary case but any other option is possible.

Reference number 103Y indicates a second camera unit. The head of a second user 111 is captured by said second camera unit 103Y. The second camera unit 103Y is a camera unit that can be utilized during video-conference sessions. The second camera unit 103Y is preferably positioned externally in exemplary case but any other option is possible. It is also conceivable that second user 111 uses or wears a HMD during an inventive video conference session.

Reference number 103Z indicates a further camera unit. The head of a further user 114 is captured by said further camera unit 103Z. The further camera unit 103Z is a camera unit that can be utilized during video-conference sessions. The further camera unit 103Z is preferably positioned externally in exemplary case but any other option is possible.

Reference number A indicates a case in which first user 101 and second user 111 are communicating via the video conferencing system. In this case only first user 101 wears a HMD, second user 111 utilizes an optical output means which is different from a HMD, like a screen. In this case data captured by first camera 103X and by second camera 103Y are transferred to the other party via any transfer medium 105 for video-conferences. The transfer medium 105 is preferably a server unit, in particular the internet, in exemplary case. It is further possible to send audio data as well as video data via path 104 from a first user terminal 100A on the side of the first user 101 to a second user terminal 100B on the side of the second user 111 and vice versa. Thus, video data captured with the first camera unit 103X is outputted via screen 109 to the second user 111. Thus, the second user 111 sees the first user wearing a HMD 110.

Reference number B indicates a case in which first user 101 and further user 114 are communicating via the video conferencing system. In this case both first user 101 and further user 114 are using respectively wearing HMDs. In this case data captured by first camera 103X and by further camera 103Z are transferred to the other party via any transfer medium 105 for video-conferences. The transfer medium 105 is preferably a server unit, in particular the internet, in exemplary case. It is further possible to send audio data as well as video data via path 104 from a first user terminal 100A on the side of the first user 101 to a further user terminal 100C on the side of further user 114 and vice versa. Thus, video data captured with the first camera unit 103X is outputted via HMD 112 to the second user 111. Video data captured by first camera unit 103A is preferably outputted via right screen of HMD 112 and left screen of HMD 112. Thus, second user 111 sees the first user wearing a HMD 110, that means video of first user 101 is transferred 113A, 113B without any alteration to right screen 112A of HMD 112 respectively glass and to left screen 112B of HMD respectively glass.

Thus, Fig. 1 simply describes what happened while invention turned-off also state of prior art, where there is no possible full face image transfer because user have HMD (VR glass in figure) no eye contact and no face-to-face communication, which highly annoys participants of video-conference.

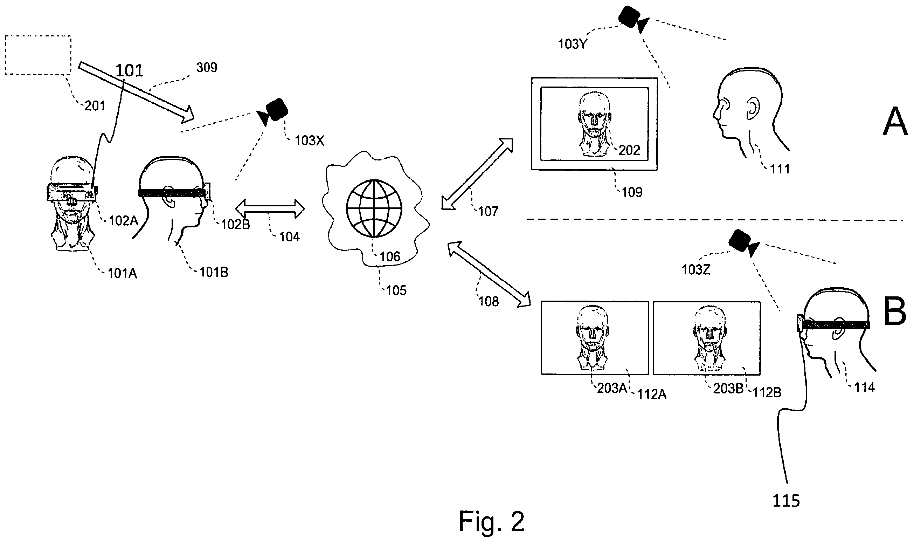

Fig. 2 shows a first schematically illustration of the inventive method and system. Reference number 201 indicates recorded head data of first user 101 for facial motion capturing, in particular captured with any method either vector, raster, image and/or video. Said recorded head data 201 preferably comprises no data representing a HMD, thus preferably just data representing the head, in particular the face, in particular the shape of face, in particular above mouth and below forehead, in particular the eyes region of a face. Said recorded head data 201 of first user 101 can be transferred to a computing system or unit, in particular a server and/or first terminal 100A or second terminal 100B or any further terminal 100C. Computing system or unit modifies data captured by first camera unit 103X with recorded data 201. Modifying hereby preferably means combining, replacing, overlaying respectively superimposing, in particular in real time. Thus, a video or picture is outputted to second user 111, wherein said video or picture is different from the video or picture captured by first camera unit 103X. The outputted respectively viewed picture is preferably artificially generated in particular by combining data captured by camera 103X and recorded head data 201. Thus, reference number 202 represents image data that transfers full face view of first user 101 even he or she uses HMD.

Also in case B further user 114 sees the eyes, in particular the full face of first person 101.

Thus, reference number 203A represents image data that transfers full face view of first user 101 even he or she uses HMD for right display of HMD, in particular VR glass. Thus, reference number 203B represents image data that transfers full face view of first user 101 even he or she uses HMD for right display of HMD, in particular VR glass.

Therefore, the present invention discloses a method for modifying video data during a video conference session or a method for providing an advanced video conference session. A first terminal 100A is provided and used, wherein first terminal 100A can be a laptop, desktop, mobile phone, tablet PC, TV or the like. Said terminal 100A preferably comprises a first camera unit 103X for capturing of at least visual input and further comprises a first head-mounted display 102. Furthermore, a second terminal 100B is provided and used at least for outputting visual input. Preferably a data transfer means, in particular a server means 106 is provided, wherein said first terminal 100A and said second terminal 100B are connected via server means 106 respectively data transfer means for data exchange. First basic image data or first basic video data 201 of a head of a first person 101 is preferably provided or captured with the first camera unit 103X. First process image data or first process video data of the head of said first person 101 while said first person 101 wears the first head-mounted display 102 is captured with first camera unit 103X. First process data sections of the first process image data or first process video data representing the visual appearance of the first head-mounted display 102 are captured, wherein a first set of modified image data or modified video data is generated by replacing the first process data sections of the first process image data or first process video data by first basic data sections. The first basic data sections are preferably part of the first basic image data or first basic video data and are representing parts of the face of said first person 101, in particularly the eyes of said person 101. The first modified image data or first modified video data, in particular representing a complete face of said first person 101, can be outputted respectively shown via an output device, in particular a screen, of the second terminal 100B.

Thus, the invention is related with video-conferencing (or any other tele-conferencing technique) while one or more users using respectively wearing HMD (Head-mounted-display). A HMD (Head-mounted-display) can be any virtual reality glasses either stand alone with its own display or mobile phone attachment, augmented reality glasses, which superimpose augmented images (videos) over real world, mixed reality devices and/or head-up-displays (HUD).

Camera devices respectively camera units 103X-103Z can be any camera, some examples external cameras or embedded camera of mobile phone or any computer. Camera can be single lens camera or dual lens (multiple lens) even light field camera.

Video-conference can be done over internet, with instant messenger (IM) or voip environment. Video-conference term preferably covers all kind of videoconferencing activities such as teleconference.

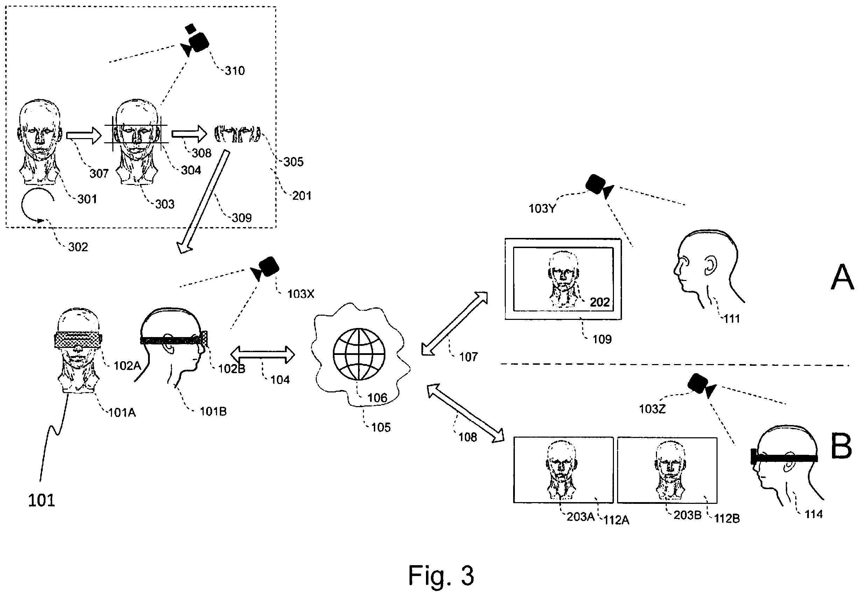

Fig. 3 shows how recorded head data 201 is captured and processed.

User head data 301 is either taken with learning cycle or recorded video or similar technique. Head data for the head of first user 101 is preferably captured of a front perspective of said head. Reference number 302 indicates a rotation movement of said head and/or of said camera unit 310, in particular in a range of at least 180° or of at least 270° or of 360°. Camera unit 310 is preferably a recording device, in particular a simple camera or more complex devices such as immersive or light depth camera preferably with scanning laser support. It is further conceivable that camera unit 310 is the first camera unit 103X or another camera unit. The size of first HMD 102 is detected and the user head data 301 is suitably cropped 307 for replacing the data representing the HMD of image or video data captured of first person 101 while using respectively wearing a HMD. The cropped data is transferred 308 to an unit for graphic respectively image data or video data modification.

Cropped data 305 is provided 309 for modifying image or video data captured by first camera unit 103X, in particular process image data or process video data.

Therefore, Fig. 2 and Fig. 3 demonstrate states while the invention is used and benefits of invention. Recorded face data (face pose) is cropped with the size of HMD and combined (overlay respectively superimpose) preferably with real time video and transferred video to second and further user are full face of first user as he/she is not using HMD which improves overall video-conference experience. In Fig 2 and Fig. 3 computations related with image/video processing are done at first user side but any other option is possible, e.g. on a server or on a terminal 100A, 100B of the respective recipient. It is also conceivable that many, in particular more than two, users are joining the same video conference session, wherein multiple or all users are using or wearing a HMD. Therefore, image or video data (process image data or process video data) of preferably all users using a HMD are preferably modified with image or video data representing face surface parts, in particularly the eyes, of the respective user.

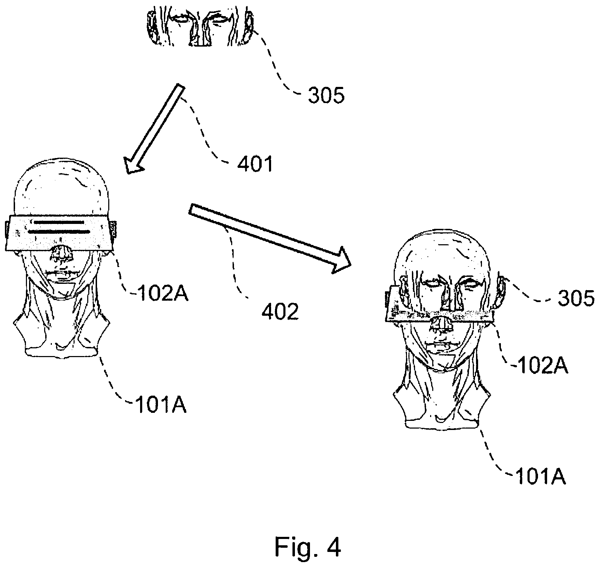

Fig. 4 shows an example for an overlay respectively replacing process. Cropped data 305 respectively data representing a predefined part of a face, in particular of the face of first user 101, in particular the eyes, overlays or replaces at least one part of process image data or process video data representing the HMD. In other words and as one option: cropped immersive data 305 is transferred 401 to process image data or process video data for partially or sectionally overlaying 402 said process image data or said process video data.

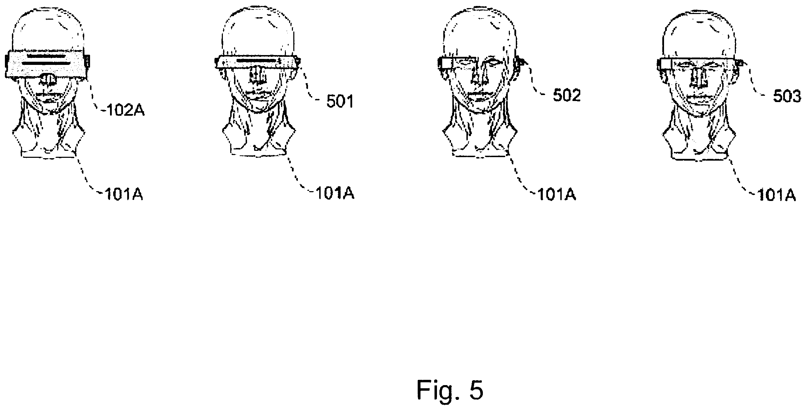

Fig. 5 shows four examples for HMD embodiments. Reference number 102A refers to a VR glass (with mobile phone / smart phone as screen), reference number 501 refers to a standalone VR glass or VR glass with own screen, reference number 502 refers to a kind of AR glass or mixed reality glass with one eye coverage and reference number 503 refers to a kind of AR glass or mixed reality glass with both eye coverage. Thus, Fig. 5 demonstrates different HMD's with different coverage area over the face with largest of VR glass with smart phone.

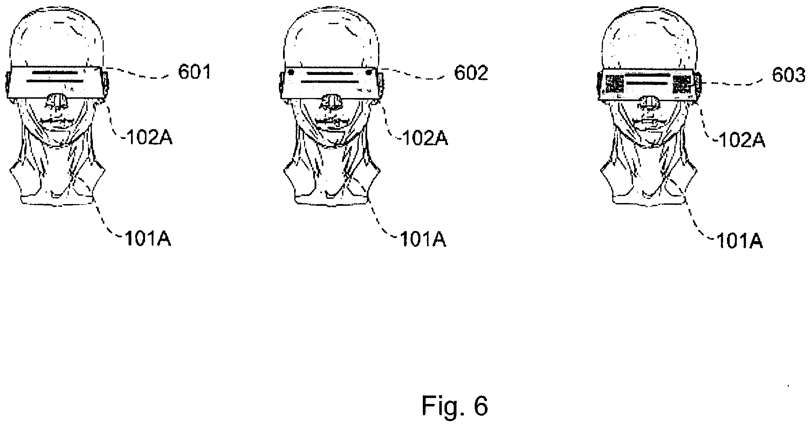

Fig. 6 shows three examples how information, in particular shape and/or coloring and/or size, about the HMD in use can be gathered. Reference number 601 refers to a marker-less detection or electronic detection for motion capture and size detection. Thus, the features of a HMD can be gathered by image analysis. Reference number 602 indicates special shapes or points or dot markers on the parts of the HMD which are visible for camera unit 103X.

According to the present invention, reference number 603 indicates QR markers, wherein the QR-code represents information about the feature of HMD or a link for downloading data representing features of said HMD. Thus, Fig. 6 demonstrates how system detects user face position HMD position and maybe HMD size. For more immersive video-conference system need to position user eyes correctly where he/she looking and correct expression different sensors and eye tracking mechanisms can be used.

Further possibilities, like data transfer via wireless technology like NFC or Bluetooth or RFID or WiFi or non-wireless respectively cable connection technology, in particular USB, are additionally or alternatively conceivable.

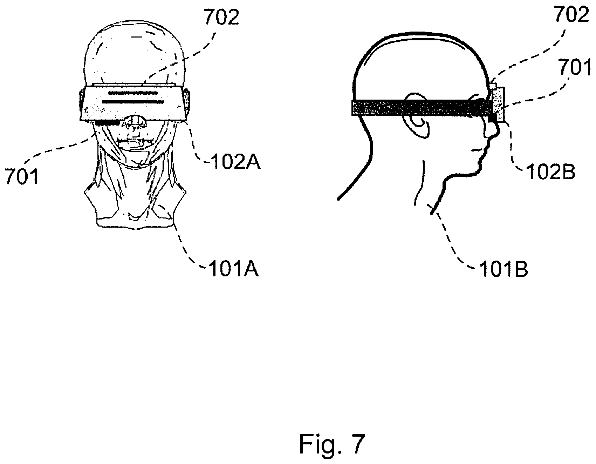

Fig. 7 shows a special HMD 102A. This HMD 102A preferably comprises an eye tracker, in particular of any kind (most probably near eye PCCR tracker), 701 and/or a detector for detecting face movements (either capacitive or optical) 702. The user head data 301, in particular the cropped user head data, is preferably modified in dependency of measurements measured by said eye tracker 701 and/or said face movement detector 702. Thus, the displayed appearance of the face of the first user 101 appears even more realistic.

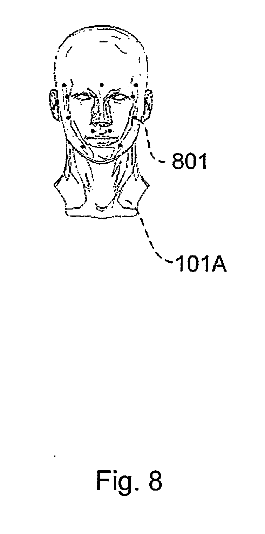

Fig. 8 shows an example for facial motion tracking. Optical detection of dot markers 801 allows a determination respectively analysis of facial motions. However, different detection methods such as marker-less methods are alternatively or additionally possible.

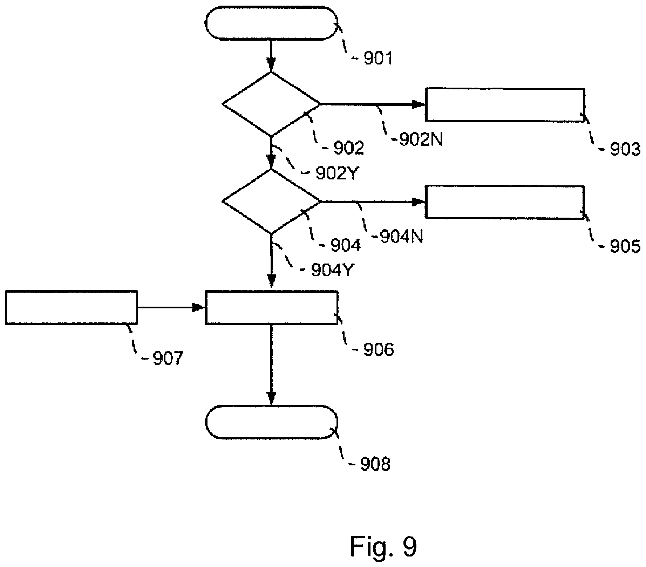

Fig. 9 shows a flow chart representing a system activation.

According to reference number 901 the inventive system respectively a video conference session is started. Thus, it is checked in 902 if the system is really started, in case system is not started 902N nothing happens 904. In case system is really started 902Y it is checked if at least one HMD is detected 904. In case no HMD device is detected 904N nothing happens. In case a HMD device is detected 904Y recorded data (basic image data or basic video data) is requested respectively loaded or generated. Then, initiation of system ends 908.

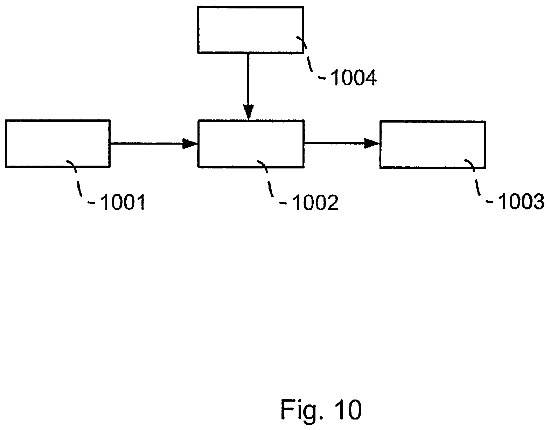

Fig. 10 shows a flowchart showing exemplarily how image processing is done at first user side, in particular by first terminal. Real time video 1001 is captured. Said captured real time video 1001 respectively said process image data or process video data is modified due to image/video processing 1002 (most preferably done at first user side but any other options such as doing computation in cloud, video-conference server or at remote users are possible). Image/video processing 1002 respectively modifying of process image data or process video data is done with recorded data 1004. Data preferably representing at least one eye of the first user is combined with said process image data or process video data. As output 1003 a combined overlaid image/video results.

Thus, overlaying computations shown in Fig. 10 can be transferred to any computation location and system and device, but most likely this computations are done at the user side and device / terminal is more likely computer (desktop, PC, laptop) or smart phone or tablet.

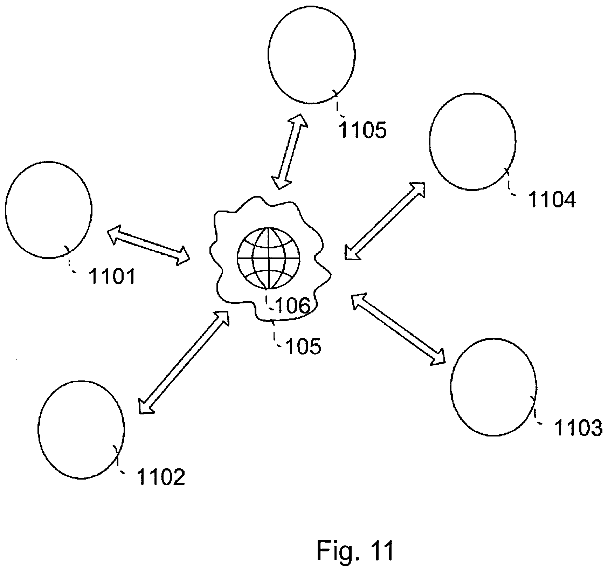

Fig. 11 shows that multiple users with or without a HMD can join an inventive video conference session, wherein at least one of these users uses respectively wears a HMD. Reference number 1101 indicates a first user (corresponding to first user 101 in Fig. 1, 2 and 3), reference number 1102 indicates a second user, reference number 1103 indicates a second user, reference number 1104 indicates a second user and reference number 1105 indicates a nth user. Thus, the video conference communication preferably occurs between at least two participants and is highly preferably facilitated by at least one transfer medium for video-conference 105, in particular the Internet 106, integrated services digital network or a direct communication link.

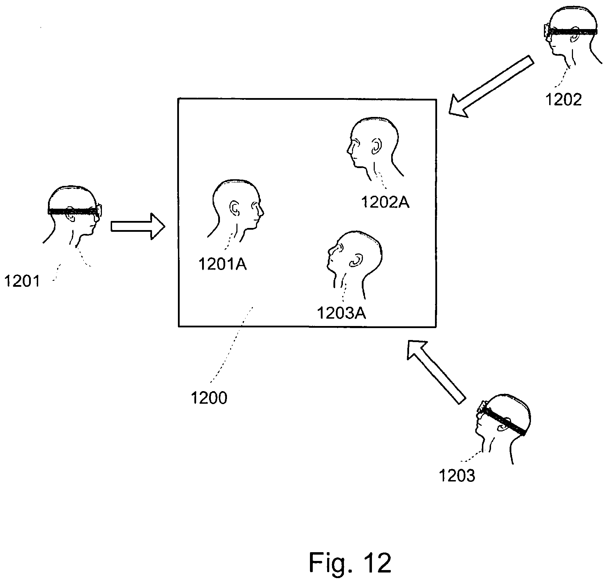

Fig. 12 shows a virtual environment 1200 respectively a virtual meeting room in exemplary case. It is also conceivable that virtual environment 1200 is a virtual spaces in particular for role playing games etc. First user 1201 has a HMD, VR glass in exemplary case. Second user 1202 also has a HMD, VR glass in exemplary case. N^{th} user 1203 also has a HMD, in particular VR glass in exemplary case. As could be seen from virtual environment 1200 all persons meeting in said virtual environment are shown without HMD 1201A, 1202A and 1203A, due to the present invention

Thus, the present invention refers to a system and a method, wherein the method preferably serves for modifying video data during a video conference session and comprises at least the steps: Providing a first terminal 100A, comprising a first camera unit 103X for capturing of at least visual input and a first head-mounted display 102; Providing a second terminal 100B at least for outputting visual input, Providing a server means 105, wherein said first terminal 100A and said second terminal 100B are connected via the server means 105 for data exchange, Providing or capturing first basic image data or first basic video data of a head of a first person 101 with the first camera unit 103X, capturing first process image data or first process video data of the head of said first person 101 with the first camera unit while said first person 101 wears the head-mounted display 102, determining first process data sections of the first process image data or first process video data representing the visual appearance of the first head-mounted display 102, generating a first set of modified image data or modified video data by replacing the first process data sections of the first process image data or first process video data by first basic data sections, wherein the first basic data sections are part of the first basic image data or first basic video data and are representing parts of the face of said person, in particularly the eyes of said first person 101.

Outputting the first modified image data or first modified video data, in particular representing a complete face of said first person 101, via the second terminal 100B.

Therefore, the inventive method, first records or takes pictures of user face without VR/AR glasses. Any technique such as light depth photography or any other 3D or immersive video/photo technique can be used during this process. After user face area near the eyes is modelled, it is preferably stored on device respectively terminal. When user starts to use VR/AR glass in either video conferencing or video calls, computer easily detects the edges of VR/AR glass (or any other method such as identifiers etc.) and combines the video with VR/AR glass to normal video, result is other user see normal face without VR/AR glasses. Additional feature will be eye tracking inside VR/AR glass can also position eyes correctly.

**Reference numbers**

| | | | |
|---|---|---|---|
| 100A | first user terminal | 109 | Screen |
| 100B | second user terminal | 110 | Transferred video of first user wearing a HMD |
| 100C | further user terminal | | |
| 101 | first person / first user | 111 | Second user |
| 101A (first user) | Front view of user head | B | Third user in video-conference who again uses VR glasses |
| 101B | Side view (profile) of user head (first user) | 112 | HMD of further user |
| 102 | first HMD | 112A | Right screen of VR glass |
| 102A | Front view of HMD device (VR glass in exemplary case) | 112B | Left screen of VR glass |
| | | 113A | Transferred video of first user without any alteration to right screen of glass |
| 102B | Side view of HMD device (VR glass in exemplary case) | 113B | Transferred video of first user without any alteration to left screen of glass |
| 103X | first camera unit for video-conference at first user (positioned externally in exemplary case but any other option is possible) | 114 | Further user |
| | | 115 | Further head-mounted display |
| 103Y | Camera for video-conference at second user (positioned externally in exemplary case but any other option is possible) | 201 | Recorded head data of first user for facial motion capture (with any method either vector, raster, image and/or video) |
| 103Z | Camera for video-conference at third user (positioned externally in exemplary case but any other option is possible) | 309 | Transferred to computing system (not shown) for combine (overlay - superimpose) real time video with recorded data |
| 104 | Both user send video-audio information | 202 | Transferred full face view of first user even he or she uses HMD |
| 105 | Any transfer medium for video-conference | 203A | Transferred full face view of first user even he or she uses HMD for right display of VR glass |
| 106 | Transfer medium is internet in exemplary case | | |
| A | Second user in video-conference who uses screen display | 203B | Transferred full face view of first user even he or she |
| | uses HMD for left display of VR glass | 701 | Eye tracker of any kind (most probably near eye PCCR tracker) |
| 301 | User head data is either taken with learning cycle or recorded video or similar | 702 | Detector for face movements (either capacitive or optical) |
| 302 | Rotating and getting 360° or similar wide angle data | 801 | Dot markers |
| 303 | The size of HMD is detected and making suitable crop | 901 | Start |
| 304 | Suitable crop | 902 | Is invention (disclosed system) activated |
| 305 | Cropped data | 902N/Y | No/Yes |
| 307 | Data transferred from crop by getting suitable HMD size | 903 | Do nothing |
| | | 904 | Is HMD detected? |
| 308 | Cropped data transfer | 904N/Y | No/Yes |
| 310 | Recording device (simple camera or more complex devices such as immersive or light depth camera with scanning laser support) | 905 | Do nothing |
| | | 906 | Overlay real time video with recorded data |
| | | 907 | Recorded data |
| 401 | Cropped immersive data is transferred | 908 | End |
| | | 1001 | Real time video |
| 402 | Overlaying is done | 1002 | Image/video processing (most preferably done at first user side but any other options such as doing computation in cloud, video-conference server or at remote users are possible) |
| 501 | Standalone VR glass or VR glass with own screen | | |
| 502 | Kind of AR Glass or mixed reality glass with one eye coverage | | |
| 503 | Kind of AR Glass or mixed reality glass with one both eye coverage | 1003 | Output combined overlaid image |
| | | 1004 | Recorded data |
| 601 | Marker-less detection or electronic detection for motion capture and size detection | 1200 | Virtual environment, virtual meeting room in exemplary case, but also virtual spaces and/or role playing games etc. are possible |
| 602 | Dot markers | | |
| 603 | QR markers | 1201 | First user with HMD, VR glass in exemplary case |
| 1201A | First user seen in virtual environment | 1203 | Nth user with HMD, VR glass in exemplary case |
| 1202 | Second user with HMD, VR glass in exemplary case | 1203A | Nth user seen in virtual environment |
| 1202A | Second user seen in virtual environment | | |

## Claims

1. Method for modifying video data during a video conference session,
at least comprising the steps:
Providing a first terminal (100A),
comprising a first camera unit (103X) for capturing of at least visual input
and
a first head-mounted display (102);
wherein the first head-mounted display comprises a QR-Code,
Providing a second terminal (100B) at least for outputting visual input,
Providing a server means (105),
wherein said first terminal (100A) and said second terminal (100B) are connected via the server means (105) for data exchange,
Providing or capturing first basic image data or first basic video data of a head of a first person (101) with the first camera unit (103X),
Capturing first process image data or first process video data of the head of said first person (101) with the first camera unit while said first person (101) wears the head-mounted display (102),
Determining first process data sections of the first process image data or first process video data representing the visual appearance of the first head-mounted display (102) and the QR-code, wherein the QR-code represents information about the shape of the HMD or a link for downloading data representing the shape of said HMD,
Generating a first set of modified image data or modified video data by replacing the first process data sections of the first process image data or first process video data by first basic data sections,
wherein the first basic data sections are part of the first basic image data or first basic video data and are representing parts of the face of said person, in particularly the eyes of said first person (101).

2. Method according to claim 1,
**characterized in that**
the second terminal (100B) comprises
a second camera unit (103Y)
and
a second head-mounted display,
and by steps:
Providing or capturing second basic image data or second basic video data of a head of a second person (111) with the second camera unit (103Y),
Capturing second process image data or second process video data of the head of said second person (111) with the second camera unit (103Y) while said second person (111) wears the second head-mounted display,
Determining second process data sections of the second process image data or second process video data representing the visual appearance of the second head-mounted display,
Forming a second set of modified image data or modified video data by replacing the second process data sections of the second process image data or second process video data by second basic data sections,
wherein the second basic data sections are part of the second basic image data or second basic video data and are representing parts of the face of said second person (111), in particularly the eyes of said second person (111),
Outputting the second modified image data or second modified video data via the first terminal (100A).

3. Method according to claim 1 or claim 2,
**characterized in that**
the first modified image data or first modified video data and/or the second modified image data or second modified video data is/are outputted via at least one further terminal (100C) connected to the server means (105).

4. Method according to any of the preceding claims,
**characterized in that**
a further terminal (100C) comprises a further camera unit (103Z) and a further head-mounted display (112),
and by steps:
Providing or capturing further basic image data or further basic video data of a head of a further person (114) with the further camera unit (103Z),
Capturing further process image data or further process video data of the head of said further person (114) with the further camera unit (103Z) while said further person (114) wears the further head-mounted display (112),
Determining further process data sections of the further process image data or further process video data representing the visual appearance of the further head-mounted display (112),
Forming a further set of modified image data or modified video data by replacing the further process data sections of the further process image data or further process video data by further basic data sections,
wherein the further basic data sections are part of the further basic image data or further basic video data and are representing parts of the face of said further person (114), in particularly the eyes of said further person (114),
Outputting the further modified image data or further modified video data via the first terminal (100A) and/or via the second terminal (100B), in particular at the same time.

5. Method according to any of the preceding claims,
**characterized in that**
first, second and/or further basic video data or first, second and/or further basic image data are stored in a memory of the respective terminal (100A, 100B, 100C) and/or on the server means (105),
wherein first, second and/or further basic video data or first, second and/or further basic image data are captured once and processed in case first, second and/or further modified video data or first, second and/or further modified image data is required or
wherein first, second and/or further basic video data or first, second and/or further basic image data are captured each time said first, second and/or third person (101, 111, 114) joins a video conference and the first, second and/or further basic video data or first, second and/or further basic image data is updated or replaced and processed in case first, second and/or further modified video data or first, second and/or further modified image data is required.

6. Method according to any of the preceding claims,
**characterized in that**
at least one terminal (100A) and preferably the majority of terminals (100a, 100B) or all terminals (100A, 100B, 100C) are comprising means for capturing and/or outputting audio data, wherein said captured audio data captured by one terminal is at least routed to one or multiple further terminals.

7. Method according to any of the preceding claims,
**characterized in that**
the position of the first head-mounted (102) display with respect to the face of the first person (101) is determined by means of object recognition,
the shape of the first head-mounted display (102) is determined by object recognition and/or identification data is visually or electronically provided.

8. Method according to any of the preceding claims,
**characterized in that**
face movement data representing movements of skin portions of the face of the first person (101) is generated, wherein the movements of the skin portions are captured by said first camera unit (103X).

9. Method according to any of the preceding claims,
**characterized in that**
eye movement data representing movements of at least one eye of the first person (101) is generated, wherein the movements of the eye are captured by an eye tracking means (702).

10. Method according to any of the preceding claims 8 or 9,
**characterized in that**
first basic data sections are modified in dependency
of said captured face movement data of the face of the first person (101),
and/or
of said captured eye movement data of at least one eye of the first person (101).

11. Method according to claim 10,
**characterized in that**
eye data representing shapes of the eyes of the first person (101) is identified as part of the first basic data sections,
wherein the eye data is modified in dependency of said captured eye movement data,
and/or
skin data representing the skin portions of the face of the first person (101) is modified above and/or below the eyes in the first basic data section is identified,
wherein the skin data in dependency of said captured face movement data.

12. Method according to any of claims 10 or 11,
**characterized in that**
eye tracking means (702) is preferably a near eye PCCR tracker,
wherein said eye tracking means (702) is arrange on or inside the first head-mounted display (102).

13. Method according to any of the preceding claims,
**characterized by**
receiving information relating to the pose of the head of the first person (101) ;
orienting a virtual model of the head and facial gaze of the head according to the pose of the object;
projecting visible pixels from a portion of the videoconference communication onto the virtual model;
creating synthesized eyes of the head that produces a facial gaze at a desired point in space;
orienting the virtual model according to the produced facial gaze; and
projecting the virtual model onto a corresponding portion of the videoconference communication,
wherein at least one part of the first set of modified image data or modified video data is replaced by said virtual model.

14. Computer program product for executing a method according to claims 1-13

15. System for video conference sessions,
at least comprising:
A first terminal (100A),
comprising a first camera unit (103X) for capturing of at least visual input and a first head-mounted display (102),
wherein the first head-mounted display comprises a QR-Code,
a second terminal (100B) at least for outputting visual input,
a server means (105),
wherein said first terminal (100A) and said second terminal (100B) are connected via the server means (105) for data exchange,
wherein first basic image data or first basic video data of a head of a first person (101) is provided or captured with the first camera unit (103X),
wherein first process image data or first process video data of the head of said first person (101) is captured with the first camera unit (103X) while said first person (101) wears the head-mounted display (102),
wherein first process data sections of the first process image data or first process video data representing the visual appearance of the first head-mounted display and the QR-code are determined, wherein the QR-code represents information about the shape of the HMD or a link for downloading data representing the shape of said HMD,
wherein a first set of modified image data or modified video data is formed by replacing the first process data sections of the first process image data or first process video data by first basic data sections,
wherein the first basic data sections are part of the first basic image data or first basic video data and are representing parts of the face of said person (101), in particularly the eyes of said person (101),
wherein the first modified image data or first modified video data, in particular representing a complete face of said person (101), are outputted via the second terminal (100B).

## Patentansprüche

1. Verfahren zum Ändern von Videodaten während einer Videokonferenzsitzung,
die zumindest die Schritte umfassen:
Bereitstellung eines ersten Terminals (100A),
mit einer ersten Kameraeinheit (103X) zum Erfassen von zumindest visuellem Input
und
ein erstes kopfmontiertes Display (102);
wobei die erste am Kopf montierte Anzeige einen QR-Code umfasst,
Bereitstellung eines zweiten Terminals (100B) zumindest für die Ausgabe visueller Eingaben,
Bereitstellen eines Servers bedeutet (105),
wobei das erste Terminal (100A) und das zweite Terminal (100B) über die Servereinrichtung (105) zum Datenaustausch verbunden sind,
Bereitstellen oder Erfassen erster grundlegender Bilddaten oder erster grundlegender Videodaten eines Kopfes einer ersten Person (101) mit der ersten Kameraeinheit (103X),
Erfassen von Erstverarbeitungs-Bilddaten oder Erstverarbeitungs-Videodaten des Kopfes der ersten Person (101) mit der ersten Kameraeinheit, während die erste Person (101) das am Kopf angebrachte Display (102) trägt,
Bestimmen von ersten Prozessdatenabschnitten der ersten Prozessbilddaten oder ersten Prozessvideodaten, die das visuelle Erscheinungsbild der ersten am Kopf montierten Anzeige (102) und den QR-Code darstellen, wobei der QR-Code Informationen über die Form des HMD oder einen Link zum Herunterladen von Daten, die die Form des HMD darstellen, darstellt,
Erzeugen eines ersten Satzes von modifizierten Bilddaten oder modifizierten Videodaten durch Ersetzen der ersten Prozessdatenabschnitte der ersten Prozessbilddaten oder ersten Prozessvideodaten durch erste Basisdatenabschnitte,
wobei die ersten Grunddatenabschnitte Teil der ersten Grundbilddaten oder ersten Grundvideodaten sind und Teile des Gesichts der Person, insbesondere der Augen der ersten Person (101), darstellen.

2. Verfahren nach Anspruch 1,
**dadurch gekennzeichnet, dass**
das zweite Terminal (100B) umfasst
eine zweite Kameraeinheit (103Y)
und
ein zweites kopfmontiertes Display,
und durch Schritte:
Bereitstellen oder Erfassen von zweiten grundlegenden Bilddaten oder zweiten grundlegenden Videodaten eines Kopfes einer zweiten Person (111) mit der zweiten Kameraeinheit (103Y),
Erfassen von zweiten Prozessbilddaten oder zweiten Prozessvideodaten des Kopfes der zweiten Person (111) mit der zweiten Kameraeinheit (103Y), während die zweite Person (111) den zweiten am Kopf angebrachten Bildschirm trägt,
Bestimmen von zweiten Prozessdatenabschnitten der zweiten Prozessbilddaten oder zweiten Prozessvideodaten, die das visuelle Erscheinungsbild des zweiten kopfmontierten Displays darstellen,
Bilden eines zweiten Satzes von modifizierten Bilddaten oder modifizierten Videodaten durch Ersetzen der zweiten Prozessdatenabschnitte der zweiten Prozessbilddaten oder zweiten Prozessvideodaten durch zweite Basisdatenabschnitte,
wobei die zweiten Grunddatenabschnitte Teil der zweiten Grundbilddaten oder zweiten Grundvideodaten sind und Teile des Gesichts der zweiten Person (111), insbesondere der Augen der zweiten Person (111), darstellen,
Ausgabe der zweiten modifizierten Bilddaten oder der zweiten modifizierten Videodaten über das erste Terminal (100A).

3. Verfahren nach Anspruch 1 oder Anspruch 2,
**dadurch gekennzeichnet, dass**
die ersten modifizierten Bilddaten oder ersten modifizierten Videodaten und/oder die zweiten modifizierten Bilddaten oder zweiten modifizierten Videodaten über mindestens ein weiteres Terminal (100C) ausgegeben wird/werden, das mit der Server-Einrichtung (105) verbunden ist.

4. Verfahren nach einem der vorstehenden Ansprüche,
**dadurch gekennzeichnet, dass**
ein weiteres Terminal (100C) umfasst eine weitere Kameraeinheit (103Z) und ein weiteres kopfmontiertes Display (112),
und durch Schritte:
Bereitstellen oder Erfassen weiterer grundlegender Bilddaten oder weiterer grundlegender Videodaten eines Kopfes einer weiteren Person (114) mit der weiteren Kameraeinheit (103Z),
Erfassen weiterer Prozessbilddaten oder weiterer Prozessvideodaten des Kopfes der genannten weiteren Person (114) mit der weiteren Kameraeinheit (103Z), während die genannte weitere Person (114) das weitere am Kopf angebrachte Display (112) trägt,
Bestimmung von weiteren Prozessdatenabschnitten der weiteren Prozessbilddaten oder weiteren Prozessvideodaten, die das visuelle Erscheinungsbild des Weiteren kopfmontierten Displays darstellen (112),
Bilden eines weiteren Satzes von modifizierten Bilddaten oder modifizierten Videodaten durch Ersetzen der weiteren Prozessdatenabschnitte der weiteren Prozessbilddaten oder der weiteren Prozessvideodaten durch weitere Basisdatenabschnitte,
wobei die weiteren Grunddatenabschnitte Teil der weiteren Grundbilddaten oder weiteren Grundvideodaten sind und Teile des Gesichts der weiteren Person (114), insbesondere die Augen der weiteren Person (114), darstellen,
Ausgabe der weiter modifizierten Bilddaten oder weiter modifizierten Videodaten über das erste Terminal (100A) und/oder über das zweite Terminal (100B), insbesondere zeitgleich.

5. Verfahren nach einem der vorstehenden Ansprüche,
**dadurch gekennzeichnet, dass**
erste, zweite und/oder weitere grundlegende Videodaten oder erste, zweite und/oder weitere grundlegende Bilddaten werden in einem Speicher des jeweiligen Terminals (100A, 100B, 100C) und/oder auf dem Servermittel (105) gespeichert,
wobei erste, zweite und/oder weitere grundlegende Videodaten oder erste, zweite und/oder weitere grundlegende Bilddaten einmal erfasst und verarbeitet werden, falls erste, zweite und/oder weiter modifizierte Videodaten oder erste, zweite und/oder weiter modifizierte Bilddaten erforderlich sind
oder
wobei erste, zweite und/oder weitere grundlegende Videodaten oder erste, zweite und/oder weitere grundlegende Bilddaten jedes Mal erfasst werden, wenn die erste, zweite und/oder dritte Person (101, 111, 114) an einer Videokonferenz teilnimmt, und die ersten, zweiten und/oder weiteren grundlegenden Videodaten oder ersten, zweiten und/oder weiteren grundlegenden Bilddaten aktualisiert oder ersetzt und verarbeitet werden, falls erste, zweite und/oder weiter modifizierte Videodaten oder erste, zweite und/oder weiter modifizierte Bilddaten erforderlich sind.

6. Verfahren nach einem der vorstehenden Ansprüche,
**dadurch gekennzeichnet, dass**
mindestens ein Terminal (100A) und vorzugsweise die Mehrheit der Terminals (100a, 100B) oder alle Terminals (100A, 100B, 100C) Mittel zum Erfassen und/oder Ausgeben von Audiodaten aufweisen, wobei die von einem Terminal erfassten Audiodaten mindestens zu einem oder mehreren weiteren Terminals geleitet werden.

7. Verfahren nach einem der vorstehenden Ansprüche,
**dadurch gekennzeichnet, dass**
die Position des ersten kopfmontierten (102) Displays in Bezug auf das Gesicht der ersten Person (101) wird mittels Objekterkennung bestimmt,
die Form des ersten kopfmontierten Displays (102) wird durch Objekterkennung bestimmt und/oder es werden visuell oder elektronisch Identifikationsdaten bereitgestellt.

8. Verfahren nach einem der vorstehenden Ansprüche,
**dadurch gekennzeichnet, dass**
Gesichtsbewegungsdaten, die Bewegungen von Hautabschnitten des Gesichts der ersten Person (101) darstellen, erzeugt werden, wobei die Bewegungen der Hautabschnitte von der ersten Kameraeinheit (103X) erfasst werden.

9. Verfahren nach einem der vorstehenden Ansprüche,
**dadurch gekennzeichnet, dass**
Augenbewegungsdaten, die Bewegungen mindestens eines Auges der ersten Person (101) darstellen, erzeugt werden, wobei die Bewegungen des Auges durch eine Augenverfolgungseinrichtung (702) erfasst werden.

10. Verfahren nach einem der vorstehenden Ansprüche 8 oder 9,
**dadurch gekennzeichnet, dass**
erste Grunddatenabschnitte werden in Abhängigkeit modifiziert
der genannten erfassten Gesichtsbewegungsdaten des Gesichts der ersten Person (101),
und/oder
der erfassten Augenbewegungsdaten von mindestens einem Auge der ersten Person (101).

11. Verfahren nach Anspruch 10,
**dadurch gekennzeichnet, dass**
Augendaten, die Formen der Augen der ersten Person (101) darstellen, werden als Teil der ersten Basisdatenabschnitte identifiziert,
wobei die Augendaten in Abhängigkeit von den erfassten Augenbewegungsdaten modifiziert werden,
und/oder
Hautdaten, die die Hautpartien des Gesichts der ersten Person (101) repräsentieren, werden oberhalb und/oder unterhalb der Augen im ersten Abschnitt der Basisdaten modifiziert und identifiziert,
wobei die Hautdaten in Abhängigkeit von den erfassten Gesichtsbewegungsdaten

12. Verfahren nach einem der Ansprüche 10 oder 11,
**dadurch gekennzeichnet, dass**
das Eye-Tracking-Mittel (702) vorzugsweise ein Nahaugen-PCCR-Tracker ist,
wobei die Augenverfolgungseinrichtung (702) auf oder innerhalb der ersten am Kopf montierten Anzeige (102) angeordnet ist.

13. Verfahren nach einem der vorstehenden Ansprüche,
**gekennzeichnet durch**
Informationen bezüglich der Pose des Kopfes der ersten Person zu erhalten (101);
die Orientierung eines virtuellen Modells des Kopfes und des Gesichtsblicks des Kopfes entsprechend der Pose des Gegenstandes;
Projizieren sichtbarer Pixel von einem Teil der Videokonferenzkommunikation auf das virtuelle Modell;
Erzeugen synthetisierter Augen des Kopfes, die einen Gesichtsblick an einem gewünschten Punkt im Raum erzeugen;
Orientieren des virtuellen Modells entsprechend dem erzeugten Gesichtsblick; und
Projektion des virtuellen Modells auf einen entsprechenden Teil der Videokonferenzkommunikation,
wobei mindestens ein Teil des ersten Satzes von modifizierten Bilddaten oder modifizierten Videodaten durch das virtuelle Modell ersetzt wird.

14. Computerprogrammprodukt zur Ausführung eines Verfahrens nach den Ansprüchen 1-13.

15. System für Videokonferenzsitzungen,
mindestens umfassend:
ein erstes Terminal (100A),
mit einer ersten Kameraeinheit (103X) zum Erfassen von zumindest visuellem Input und einem ersten am Kopf montierten Display (102),
wobei die erste am Kopf montierte Anzeige einen QR-Code umfasst,
ein zweites Terminal (100B) zumindest für die Ausgabe visueller Eingaben,
ein Server bedeutet (105),
wobei das erste Terminal (100A) und das zweite Terminal (100B) über die Servereinrichtung (105) zum Datenaustausch verbunden sind,
wobei erste grundlegende Bilddaten oder erste grundlegende Videodaten eines Kopfes einer ersten Person (101) mit der ersten Kameraeinheit (103X) bereitgestellt oder erfasst werden,
wobei erste Prozessbilddaten oder erste Prozessvideodaten des Kopfes der ersten Person (101) mit der ersten Kameraeinheit (103X) erfasst werden, während die erste Person (101) das am Kopf angebrachte Display (102) trägt,
wobei erste Prozessdatenabschnitte der ersten Prozessbilddaten oder ersten Prozessvideodaten, die das visuelle Erscheinungsbild der ersten am Kopf angebrachten Anzeige darstellen, und der QR-Code bestimmt werden, wobei der QR-Code Informationen über die Form des HMD oder einen Link zum Herunterladen von Daten, die die Form des HMD darstellen, darstellt,
wobei ein erster Satz von modifizierten Bilddaten oder modifizierten Videodaten gebildet wird, indem die ersten Prozessdatenabschnitte der ersten Prozessbilddaten oder ersten Prozessvideodaten durch erste Basisdatenabschnitte ersetzt werden,
wobei die ersten Grunddatenabschnitte Teil der ersten Grundbilddaten oder ersten Grundvideodaten sind und Teile des Gesichts der Person (101), insbesondere der Augen der Person (101), darstellen,
wobei die ersten modifizierten Bilddaten oder ersten modifizierten Videodaten, die insbesondere ein vollständiges Gesicht der Person (101) darstellen, über das zweite Terminal (100B) ausgegeben werden.

## Revendications

1. Méthode de modification des données vidéo pendant une session de vidéoconférence,
comprenant au moins les étapes :
Fournir un premier terminal (100A),
comprenant une première unité de caméra (103X) pour la capture d'au moins une entrée visuelle
et
un premier écran monté sur la tête (102) ;
dans lequel le premier affichage monté sur la tête comprend un code QR,
Fournir un deuxième terminal (100B) au moins pour la sortie d'une entrée visuelle,
Fournir un serveur signifie (105),
dans lequel ledit premier terminal (100A) et ledit second terminal (100B) sont connectés via le moyen de serveur (105) pour l'échange de données,
Fournir ou capturer les premières données d'image de base ou les premières données vidéo de base de la tête d'une première personne (101) avec la première unité de caméra (103X),
Capture des données d'image de premier traitement ou des données vidéo de premier traitement de la tête de ladite première personne (101) avec la première unité de caméra alors que ladite première personne (101) porte l'écran monté sur la tête (102),
Déterminer les sections de données de premier traitement des données d'image de premier traitement ou des données vidéo de premier traitement représentant l'apparence visuelle du premier écran monté sur la tête (102) et le code QR, dans lequel le code QR représente des informations sur la forme du HMD ou un lien pour télécharger des données représentant la forme dudit HMD,
Génération d'un premier ensemble de données d'image ou de données vidéo modifiées en remplaçant les premières sections de données de traitement des premières données d'image ou de vidéo de traitement par les premières sections de données de base,
où les premières sections de données de base font partie des premières données d'image de base ou des premières données vidéo de base et représentent des parties du visage de ladite personne, en particulier les yeux de ladite première personne (101).

2. Méthode selon la revendication 1,
**caractérisé en ce que**
le deuxième terminal (100B) comprend
une deuxième unité de caméra (103Y)
et
un deuxième écran monté sur la tête,
et par étapes :
Fournir ou capturer des secondes données d'image de base ou des secondes données vidéo de base de la tête d'une seconde personne (111) avec la seconde unité de caméra (103Y),
Capture de données d'image de second traitement ou de données vidéo de second traitement de la tête de ladite seconde personne (111) avec la seconde unité de caméra (103Y) alors que ladite seconde personne (111) porte le second affichage monté sur la tête,
Détermination des sections de données de second traitement des données d'image de second traitement ou des données vidéo de second traitement représentant l'aspect visuel du second écran monté sur la tête,
Formation d'un deuxième ensemble de données d'image ou de données vidéo modifiées en remplaçant les sections de données de deuxième processus des données d'image ou de vidéo de deuxième processus par des sections de données de base,
dans laquelle les sections des secondes données de base font partie des secondes données d'image de base ou des secondes données vidéo de base et représentent des parties du visage de ladite seconde personne (111), en particulier les yeux de ladite seconde personne (111),
Sortie de la deuxième donnée d'image modifiée ou de la deuxième donnée vidéo modifiée via le premier terminal (100A).

3. Méthode selon la revendication 1 ou la revendication 2,
**caractérisé en ce que**
les premières données d'image modifiées ou les premières données vidéo modifiées et/ou les deuxièmes données d'image modifiées ou les deuxièmes données vidéo modifiées est/sont émises par au moins un autre terminal (100C) connecté au moyen de serveur (105).

4. Méthode selon l'une des revendications précédentes,
**caractérisé en ce que**
un autre terminal (100C) comprend une autre unité de caméra (103Z) et un autre écran monté sur la tête (112),
et par étapes :
Fournir ou capturer d'autres données d'image de base ou d'autres données vidéo de base de la tête d'une autre personne (114) avec l'unité de caméra supplémentaire (103Z),
Capture de données d'images ou de données vidéo de la tête de ladite autre personne (114) avec l'unité de caméra supplémentaire (103Z) alors que ladite autre personne (114) porte l'écran monté sur la tête supplémentaire (112),
Déterminer les sections de données de traitement ultérieur des données d'image de traitement ultérieur ou des données vidéo de traitement ultérieur représentant l'apparence visuelle de l'écran monté sur la tête (112),
Formation d'un ensemble supplémentaire de données d'image ou de données vidéo modifiées en remplaçant les sections de données de traitement supplémentaires des données d'image ou de vidéo de traitement supplémentaires par d'autres sections de données de base,
où les autres sections de données de base font partie des autres données d'image de base ou des autres données vidéo de base et représentent des parties du visage de ladite autre personne (114), en particulier les yeux de ladite autre personne (114),
Sortie des données d'image modifiées ou des données vidéo modifiées via le premier terminal (100A) et/ou le second terminal (100B), en particulier en même temps.

5. Méthode selon l'une des revendications précédentes,
**caractérisé en ce que**
les premières, secondes et/ou autres données vidéo de base ou les premières, secondes et/ou autres données d'image de base sont stockées dans une mémoire du terminal respectif (100A, 100B, 100C) et/ou sur le moyen serveur (105),
dans lequel les premières, deuxièmes et/ou autres données vidéo de base ou les premières, deuxièmes et/ou autres données d'image de base sont saisies une fois et traitées au cas où les premières, deuxièmes et/ou autres données vidéo modifiées ou les premières, deuxièmes et/ou autres données d'image modifiées sont nécessaires
ou
dans laquelle des premières, secondes et/ou autres données vidéo de base ou des premières, secondes et/ou autres données d'image de base sont saisies chaque fois que ladite première, seconde et/ou troisième personne (101, 111, 114) se joint à une vidéoconférence et les premières, secondes et/ou autres données vidéo de base ou les premières, secondes et/ou autres données d'image de base sont mises à jour ou remplacées et traitées au cas où des premières, secondes et/ou autres données vidéo modifiées ou des premières, secondes et/ou autres données d'image modifiées sont nécessaires.

6. Méthode selon l'une des revendications précédentes,
**caractérisé en ce que**
au moins un terminal (100A) et de préférence la majorité des terminaux (100a, 100B) ou tous les terminaux (100A, 100B, 100C) comprennent des moyens de capture et/ou de sortie de données audio, dans lesquels lesdites données audio capturées par un terminal sont au moins acheminées vers un ou plusieurs autres terminaux.

7. Méthode selon l'une des revendications précédentes,
**caractérisé en ce que**
la position du premier écran monté sur la tête (102) par rapport au visage de la première personne (101) est déterminée au moyen de la reconnaissance d'objets,
la forme du premier écran monté sur la tête (102) est déterminée par la reconnaissance de l'objet et/ou les données d'identification sont fournies visuellement ou électroniquement.

8. Méthode selon l'une des revendications précédentes,
**caractérisé en ce que**
des données de mouvements du visage représentant les mouvements des parties de peau du visage de la première personne (101) sont générées, dans lesquelles les mouvements des parties de peau sont capturés par ladite première unité de caméra (103X).

9. Méthode selon l'une des revendications précédentes,
**caractérisé en ce que**
des données sur les mouvements des yeux représentant les mouvements d'au moins un œil de la première personne (101) sont générées, dans lesquelles les mouvements de l'œil sont captés par un moyen de suivi des yeux (702).

10. Méthode selon l'une des revendications précédentes 8 ou 9,
**caractérisé en ce que**
les premières sections de données de base sont modifiées en fonction
de ces données sur les mouvements du visage de la première personne (101),
et/ou
de ces données sur les mouvements oculaires d'au moins un œil de la première personne (101).

11. Méthode selon la revendication 10,
**caractérisé en ce que**
Les données sur les yeux représentant les formes des yeux de la première personne (101) sont identifiées dans les premières sections de données de base,
où les données sur les yeux sont modifiées en fonction des données sur les mouvements des yeux saisies,
et/ou
les données relatives à la peau représentant les parties du visage de la première personne (101) sont modifiées au-dessus et/ou au-dessous des yeux dans la première section des données de base est identifiée,
où les données de la peau dépendent des données de mouvements du visage.

12. Méthode selon l'une des revendications 10 ou 11,
**caractérisé en ce que**
L'eye tracking means (702) est de préférence un tracker PCCR de proximité,
dans lequel ledit moyen de suivi des yeux (702) est disposé sur ou à l'intérieur du premier écran monté sur la tête (102).

13. Méthode selon l'une des revendications précédentes,
**caractérisé par**
recevoir des informations relatives à la pose de la tête de la première personne (101) ;
l'orientation d'un modèle virtuel de la tête et du regard de la tête en fonction de la pose de l'objet;
la projection de pixels visibles d'une partie de la communication par vidéoconférence sur le modèle virtuel ;
créer des yeux de synthèse de la tête qui produisent un regard facial en un point désiré de l'espace ;
l'orientation du modèle virtuel en fonction du regard facial produit ; et
la projection du modèle virtuel sur une partie correspondante de la communication par vidéoconférence,
dans lequel au moins une partie du premier ensemble de données d'image modifiées ou de données vidéo modifiées est remplacée par ledit modèle virtuel.

14. Produit de programme informatique pour l'exécution d'une méthode selon les revendications 1-13.

15. Système pour des sessions de vidéoconférence,
au moins comprenant :
un premier terminal (100A),
comprenant une première unité de caméra (103X) pour la capture d'au moins une entrée visuelle et un premier écran monté sur la tête (102),
dans lequel le premier écran monté sur la tête comprend un QR-Code,
un deuxième terminal (100B) au moins pour la sortie d'une entrée visuelle,
un serveur signifie (105),
dans lequel ledit premier terminal (100A) et ledit second terminal (100B) sont connectés via le moyen de serveur (105) pour l'échange de données,
où les premières données d'image de base ou les premières données vidéo de base d'une tête d'une première personne (101) sont fournies ou capturées avec la première unité de caméra (103X),
dans lequel les données d'image de premier traitement ou les données vidéo de premier traitement de la tête de ladite première personne (101) sont capturées avec la première unité de caméra (103X) tandis que ladite première personne (101) porte l'affichage monté sur la tête (102),
dans lequel des sections de données de premier traitement des données d'image de premier traitement ou des données vidéo de premier traitement représentant l'apparence visuelle du premier écran monté sur la tête et le code QR sont déterminés, dans lequel le code QR représente des informations sur la forme du HMD ou un lien pour télécharger des données représentant la forme dudit HMD,
dans lequel un premier ensemble de données d'image ou de données vidéo modifiées est formé en remplaçant les premières sections de données de traitement des premières données d'image ou des premières données vidéo de traitement par les premières sections de données de base,
où les premières sections de données de base font partie des premières données d'image de base ou des premières données vidéo de base et représentent des parties du visage de ladite personne (101), en particulier les yeux de ladite personne (101),
dans lequel les premières données d'image modifiées ou les premières données vidéo modifiées, représentant notamment un visage complet de ladite personne (101), sont sorties via le deuxième terminal (100B).
